# EUROPEAN PATENT APPLICATION

(11) **EP 4 506 063 A1**
(43) Date of publication of application: **12.02.2025**
(21) Application number: 23923652.4
(22) Date of filing: 22.08.2023
(51) Int. Cl.: B05B 1/34

(54) **SHEAR-TYPE CAVITATION NOZZLE AND APPLICATION THEREOF, AND SHEAR CAVITATION TYPE ORAL IRRIGATOR**

(30) Priority: 24.02.2023 CN 202310160520
(71) Applicant: Bixdo (SH) Healthcare Technology Co., Ltd., Shanghai 201100 (CN); Guang Dong Bixdo Health Technology Co., Ltd., Foshan, Guangdong 528300 (CN)
(72) Inventor: DING, Ning, Shanghai 201100 (CN); LI, Yi, Shanghai 201100 (CN); LU, Jinsong, Shanghai 201100 (CN)
(74) Representative: IPrime Rentsch Kaelin AG
(86) International application number: PCT/CN2023/114279
(87) International publication number: WO 2024/174485

(57) **Abstract**

A shear-type cavitation nozzle and its applications, as well as a shear-type cavitation oral irrigator; wherein the shear-type cavitation nozzle includes a main body and a shearing member (3); the main body has a cavitation chamber inside, and the main body is provided at its two ends with respectively a water inlet port (21) and a water outlet port (22) that are both in communication with the cavitation chamber. The shearing member (3) is provided inside the cavitation chamber and has an inner flow channel (303) and an outer flow channel (302). The inner flow channel (303) and the outer flow channel (302) each has a water inlet end corresponding to the water inlet port (21), and the inner flow channel (303) and the outer flow channel (302) each has a water outlet end corresponding to the water outlet port (22). The shearing member (3) reciprocates inside the cavitation chamber under action of pulsed water flow from the water inlet port (21). (Fig.1)

## Description

### CROSS-REFERENCE TO RELATED APPLICATIONS

The present disclosure claims priority to a Chinese patent application No. 202310160520.8 filed with the CNIPA on February 24, 2023 and entitled "SHEAR-TYPE CAVITATION NOZZLE, APPLICATION THEREOF AND SHEAR-TYPE CAVITATION ORAL IRRIGATOR", which is hereby incorporated by reference in its entirety.

### TECHNICAL FIELD

The present disclosure relates to a shear-type cavitation nozzle, an application thereof, and a shear-type cavitation oral irrigator.

### BACKGROUND

Commercial oral irrigators mostly adopt pulsed water flows, gradually introducing cavitation structures into the design thereof, so as to achieve a higher cleaning efficiency and a gentler flushing experience. Cavitation here refers to the process where, when a local pressure in a flow channel drops to a critical pressure (generally proximate to the vaporization pressure), gas nuclei in the water grow into bubbles. The aggregation, flow, splitting, and collapse of bubbles are collectively referred to as cavitation. The energy released by the collapse of cavitation bubbles can effectively remove bacterial plaque.

Existing cavitation structures are mainly based on venturi tubes (which change inner diameters of the tubes by a combination of contraction and expansion to cause internal hydraulic pressure changes; when the liquid flows through the contraction section and the pressure drops below the saturation vapor pressure, bubbles will be separated out, and when they move to the expansion area, they will be squeezed and burst due to increased hydraulic pressure), self-vibrating cavitation (the main structure is a Helmholtz nozzle), organ pipes, turbulence, shearing, air mixing, ultrasonic waves, etc. Among them, shear-type cavitation is mostly for liquids with liquids, and liquids with air.

There are still some shortcomings in the design of existing cavitation structures, such as the need for multiple pipelines for supplying gas or liquid or for different liquid flows, which is highly demanding on manufacturing.

### SUMMARY

The present disclosure is directed to provide a novel technical solution for a shear-type cavitation nozzle and its applications as well as a shear-type cavitation oral irrigator.

According to a first aspect of this disclosure, a shear-type cavitation nozzle is provided, including a main body and a shearing member; the main body has a cavitation chamber inside, and is provided at its two ends with respectively a water inlet port and a water outlet port that are both in communication with the cavitation chamber; the shearing member is provided inside the cavitation chamber and has an inner flow channel and an outer flow channel; the inner flow channel and the outer flow channel each has a water inlet end corresponding to the water inlet port, and the inner flow channel and the outer flow channel each has a water outlet end corresponding to the water outlet port; and the shearing member reciprocates inside the cavitation chamber under action of pulsed water flow from the water inlet port.

Optionally, the shear-type cavitation nozzle further includes an elastic restoring member provided between the shearing member and the main body, and the shearing member reciprocates in cooperation with the elastic restoring member after being acted upon by water pressure from the water inlet port, so as to perform shear-type cavitation on water flow.

Optionally, the inner flow channel is defined as a through-hole provided on the shearing member.

Optionally, the outer flow channel is defined as a water flow space between the shearing member and the main body.

Optionally, the shearing member is provided with a guide groove on an outer wall thereof, the outer flow channel being defined as the guide groove.

Optionally, the flow guide groove is a guide groove provided along a water flow direction, or a guide groove spirally provided on an outer wall of the shearing member.

Optionally, when the guide groove is provided along a water flow direction, the guide groove gradually increases in depth from the middle to both ends.

Optionally, the shearing member gradually decreases in circumferential diameter from the middle to both ends.

Optionally, the through-hole is a variable diameter through-hole which gradually decreases in diameter from a water inlet end thereof to a water outlet end thereof.

Optionally, the outer flow channel is also provided with an interconnecting hole in communication with the inner flow channel.

Optionally, the elastic restoring member is a spring provided between the shearing member and the water outlet port of the main body; and the maximum elastic potential energy of the spring in the compressed state is greater than the maximum kinetic energy of the water flow on the shearing member.

Optionally, the elastic restoring member is a spring, one end thereof being fixed to the shearing member, the other end thereof being fixed to the main body near the inlet side; and the maximum elastic potential energy of the spring in the elongated state is greater than the maximum kinetic energy of the water flow on the shearing member.

According to a second aspect of this disclosure, a shear-type cavitation oral irrigator is provided, which includes an oral irrigator main body and a shear-type cavitation nozzle described in the above embodiment; the shear-type cavitation nozzle is installed on a water outlet pipeline of the oral irrigator main body.

According to a third aspect of this disclosure, an application of the shear-type cavitation nozzle on a cleaning device is provided, where the shear-type cavitation nozzle described in the above embodiment is installed on a spray pipeline of the cleaning device, which includes but is not limited to a car washing device and an atomization device.

A technical effect of this disclosure is that:
An embodiment of the disclosure provides a shear-type cavitation nozzle shearing member that diverts the water flow in the cavitation chamber into at least two streams, inner and outer, through the inner and outer flow channels. This creates a velocity difference between the inner and outer water flows of the shearing member. The water flows with this velocity difference causes colliding and shearing in the downstream of the shearing member, proximate to the outlet port of the cavitation chamber, forming cavitation through the interaction between liquids. The air in the water flow undergoes water flow cavitation in the form of colliding and shearing, thereby creating bubbles. The shearing member, through the elastic restoring member, reciprocates within the cavitation chamber in response to the collision of water flow, further assisting the water flow inside the cavitation chamber in solid-liquid colliding (the upper and lower end surfaces of the shearing member) and shearing (the peripheral wall surface of the shearing member) cavitation; through second-time (once again) shearing, the overall water flow cavitation effect is enhanced, a large number of bubbles are formed, and the cleaning effect of the water flow is strengthened. The shearing member is opened thereon with interconnecting holes that connect the outer flow channel and the inner flow channel, allowing the outer layer of water flow outside the shearing member to be drawn in by the negative pressure created by the high-speed water flow inside the shearing member, thus initiating shearing and cavitation in advance. After shearing, the water flow enters the downstream area of the cavitation chamber near the water outlet port for a second-time (once again) liquid-liquid shearing cavitation, thereby enhancing the shearing cavitation effect.

An embodiment of the disclosure also provides a shear-type cavitation oral irrigator, which installs the shear-type cavitation nozzle on the water outlet pipeline of the oral irrigator main body, enabling the water flow of the irrigator to form a cavitation effect, produce a large number of bubbles, and thus better remove dental bacterial plaque and clean the oral cavity.

An embodiment of the disclosure also provides an application of the shear-type cavitation nozzle on a cleaning device, taking the car washing device as an example. After installing the shear-type cavitation nozzle, when spraying water and cleaning foam on the car body, it can better produce foam through the shearing action of the liquid, making the foam richer, which is more conducive to the cleaning of the car; similarly, the atomization device can make the atomization more uniform and the atomization effect better by shearing the liquid through the nozzle.

Other features and advantages of this disclosure will become clear through the detailed description of the exemplary embodiments of this disclosure with reference to the accompanying drawings.

### BRIEF DESCRIPTION OF THE DRAWINGS

The accompanying drawings, which are incorporated in the description and constitute a part of the description, illustrate embodiments of the present disclosure and, together with the description thereof, serve to explain the principles of the present disclosure.
Figure 1 is a schematic structural diagram of the shear-type cavitation nozzle of the present disclosure.
Figure 2 is a cross-sectional view taken along line A-A of Figure 2.
Figure 3 is a partial enlarged view of Figure 2.
Figure 4 is a schematic structural diagram of the spindle-shaped shearing member in the shear-type cavitation nozzle.
Figure 5 is another positional diagram of the spring and shearing member of the present disclosure.
Figure 6 is an exploded diagram of the shear-type cavitation nozzle of the present disclosure.
Figure 7 is a schematic structural diagram of the shearing member of the present disclosure.
Figure 8 is a front view of another structure of the shearing member of the present disclosure.
Figure 9 is a three-dimensional view of the structure of the shearing member shown in Figure 8.

### Reference Signs:

Water outlet pipeline 1; Main body 2; Water inlet port 21; Water outlet port 22; Shearing member 3; Swirl center body 3a; Interconnecting hole 301; Outer flow channel 302; Swirl groove 302a; Inner flow channel 303; Elastic restoring member 4.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

The specification and claims of this disclosure, if involving the terms "first" and "second", can explicitly or implicitly include one or more of such features. In the description of this disclosure, unless otherwise specified, the term "multiple" means two or more. Furthermore, in the specification and claims, "and/or" indicates at least one of the connected objects, and the character "/", generally indicates that the preceding and following related objects are in an "or" relationship.

In the description of this disclosure, it should be understood that if terms such as "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential", and other directional or positional relationships are involved, they are based on the orientation or positional relationships shown in the drawings, and are only for the convenience of describing this disclosure and simplifying the description, rather than indicating or implying that the device or component referred to must have a specific orientation, constructed and operated in a specific orientation, and therefore they should not be construed as limitations of this disclosure.

In the description of this disclosure, it should be clarified that, unless there are specific provisions and limitations, the terms "mounted", "connected", "connecting" should be understood in a broad sense. For example, it can be a fixed connection, or it can be a detachable connection, or an integral connection; it can be a mechanical connection, or it can be an electrical connection; it can be a direct connection, or it can be an indirect connection through an intermediate medium, and can be an internal connection between two components. For those of ordinary skills in the art, the specific meaning of the above terms in this disclosure can be understood according to specific scenarios.

The following is a detailed description of the shear-type cavitation nozzle according to an embodiment of this disclosure, in conjunction with the drawings.

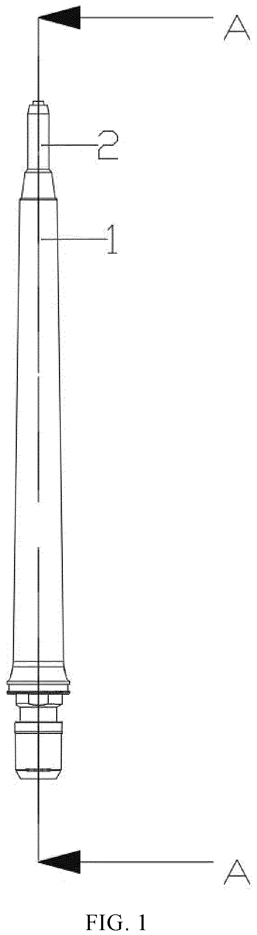

Referring to Figures 1 to 9, this disclosure provides a shear-type cavitation nozzle, which mainly includes a main body 2 and a shearing member 3. The main body 2 is the main structure of the nozzle, having a cavitation chamber inside, which is in communication with the water inlet port 21 and the water outlet port 22 of the main body 2. The water flow undergoes shear-type cavitation within the cavitation chamber of the main body 2. The two ends of the main body 2 are provided with the water inlet port 21 and the water outlet port 22, with the water inlet port 21 typically connected to an external water outlet pipeline 1, and the cavitated water flow is ejected through the water outlet port 22.

Specifically, the shearing member 3 is provided inside the cavitation chamber and has an inner flow channel 303 and an outer flow channel 302. The water inlet ends of the inner flow channel 303 and the outer flow channel 302 correspond to the water inlet port 21, and the water outlet ends of the inner flow channel 303 and the outer flow channel 302 correspond to the water outlet port 22. The shearing member 3 reciprocates within the cavitation chamber, under the driving of the pulsed water flow from the water inlet port 21. When there is a pulsed water flow at the water inlet port, within one spraying pulse cycle, when the water inlet port 21 supplies water, the shearing member 3 is pushed outward. After one pulse cycle ends, some of the water inside the main body 2 flows back, driving the shearing member 3 to restore. During spraying in the next pulse, when the water inlet port supplies water, the shearing member 3 is pushed outward again. This reciprocation causes the end face of the shearing member 3 to perform solid-liquid colliding and squeezing on the water flow, allowing for reciprocative shearing on the water flow.

The shear-type cavitation nozzle of this disclosure also includes an elastic restoring member 4, which is located between the shearing member 3 and the main body 2. The shearing member 3, under the influence of the water pressure from the water inlet port 21, reciprocates in cooperation with the elastic restoring member 4 to shear and cavitate the water flow.

The elastic restoring member 4 is interpreted as a structural component that can be restored through elastic potential energy, specifically including both restoration after elongation and restoration after compression. The term "restore" here is not defined as returning to the perfect state of the elastic restoring member 4 when it is not under force, but rather as having the ability to be restored after being elongated or compressed.

In this disclosure, the elastic restoring member 4 is implemented as a spring, however, if there are other structural components that can equivalently replace it, they should also be included within the proper protection scope of the elastic restoring member 4.

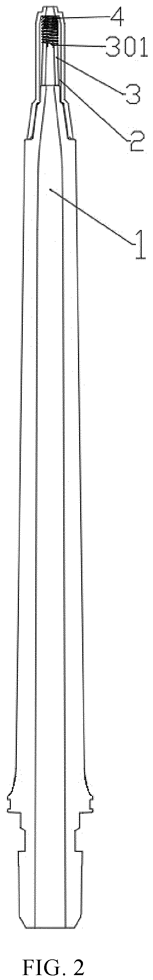

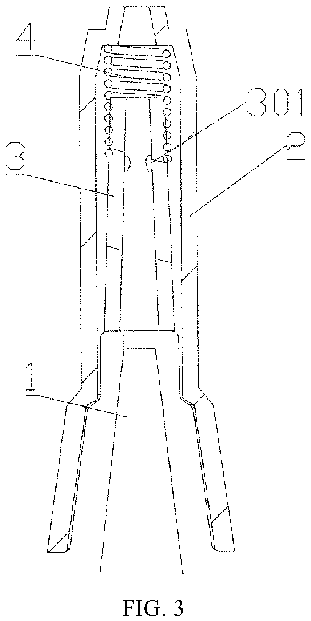

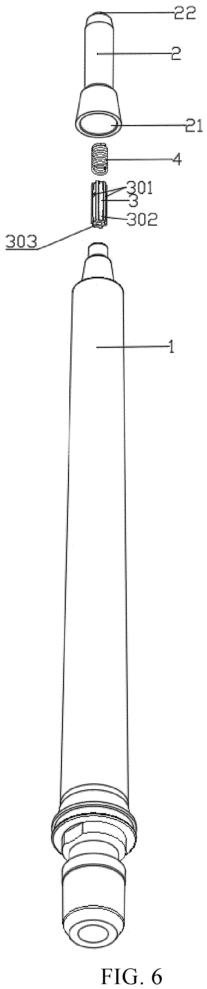

When the elastic restoring member 4 in this disclosure is a spring, the installation may be in the following two ways:
Referring to Figures 2 and 3 in conjunction with Figure 6, the spring is provided between the shearing member 3 and the water outlet port 22 of the main body 2. When the water flow from the water inlet port 21 pushes the shearing member 3, the spring is located between the shearing member 3 and the water outlet port 22 and gradually compressed, with the elastic potential energy stored in the spring gradually increasing. When the maximum elastic potential energy of the spring in the compressed state exceeds the maximum kinetic energy of the water flow acting on the shearing member 3, the elastic potential energy is released to push the shearing member 3 back, and the elastic potential energy gradually decreases. When it becomes less than the pushing force of the water flow on the shearing member 3, the spring is compressed again, creating a reciprocative shearing effect of the shearing member 3 within the cavitation chamber.

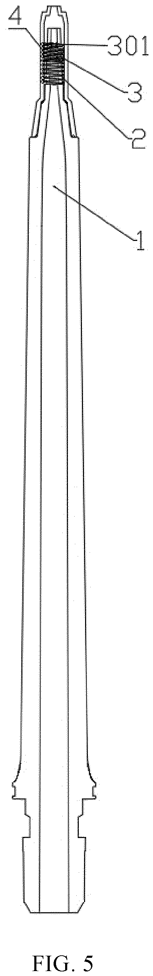

Please refer to Figure 5, the spring is located between the shearing member 3 and the main body 2 at the water inlet port 21. The difference is that one end of the spring is fixed to the shearing member 3, and the other end is fixed to one side of the main body 2 proximate to the water inlet port 21. When the water flow from the water inlet port 21 pushes the shearing member 3, the spring, connected between the shearing member 3 and the water inlet port 21, gradually stretches, with the elastic potential energy stored in the spring gradually increasing. When the maximum elastic potential energy of the spring in the stretched state exceeds the maximum kinetic energy of the water flow acting on the shearing member 3, the elastic potential energy is released, the spring contracts, and pulls the shearing member 3 back, with the elastic potential energy gradually decreasing. When it becomes less than the pushing force of the water flow on the shearing member 3, the spring is stretched again, creating a reciprocative shearing effect of the shearing member 3 within the cavitation chamber.

In this disclosure, the water flow space between the outer wall of the shearing member 3 and the inner wall of the main body 2 forms the outer flow channel 302, and a portion of the water flow from the water inlet port 21 of the main body 2 passes through the outer flow channel 302 before reaching the water outlet port 22; the interior of the shearing member 3 is penetrated by at least one through-hole, forming the inner flow channel 303 of the shearing member 3.

To facilitate better diverting the water flow from the water inlet port 21 into the outer flow channel 302 and the inner flow channel 303, and to facilitate the water flow to collide with and push the shearing member 3: the hole diameter of the shearing member 3 at the end of the main body 2 proximate to the water inlet port 21 can be smaller than the diameter of the water inlet port 21. Therefore, when a large amount of water enters the water inlet port 21, some water enters the through-hole, and some water collides with and pushes away the shearing member 3, allowing some of the water flow to also enter the outer flow channel 302 through the space between the shearing member 3 and the water inlet port 21.

When the water flow enters the cavitation chamber through the water inlet port 21 and is diverted into the inner flow channel 303 and the outer flow channel 302, the inner flow channel 303 is a through-hole, and the water flow enters directly without being influenced by the flow velocity. However, when entering the outer flow channel 302, the water flow is influenced by the structure of the shearing member 3 itself, causing the flow velocity to slow down. Therefore, at the water outlet port 22, the two streams of water flow converge at different flow velocities, achieving a liquid-liquid shearing effect, and the reciprocating motion of the shearing member 3 also achieves a solid-liquid shearing effect.

It should be noted that this disclosure does not impose any structural restrictions on the space between the outer wall of the shearing member 3 and the inner wall of the main body 2, nor does it impose any quantity restriction on the through-holes inside the shearing member 3.

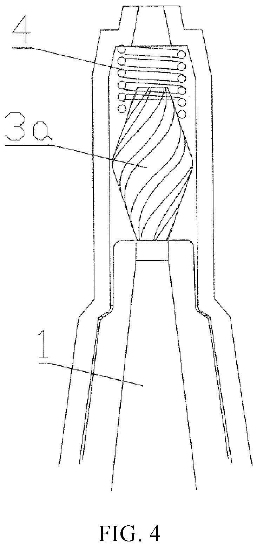

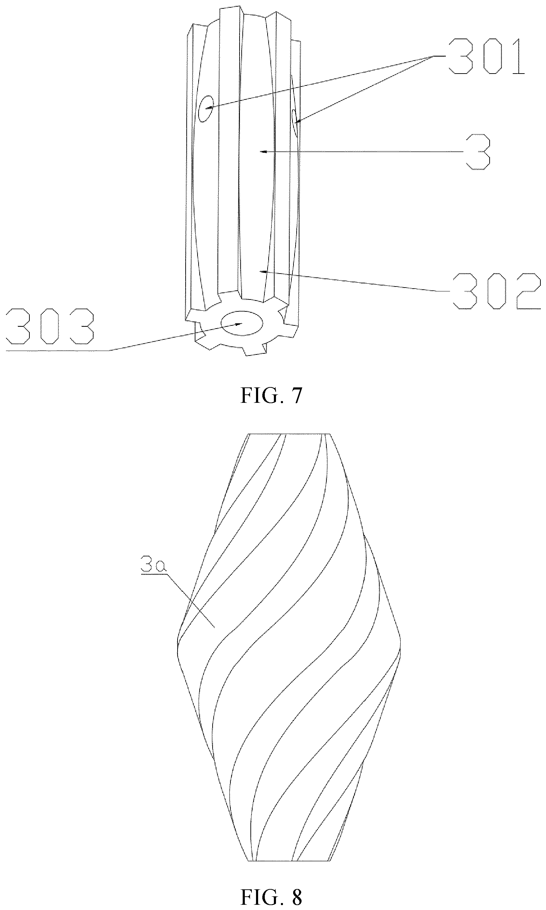

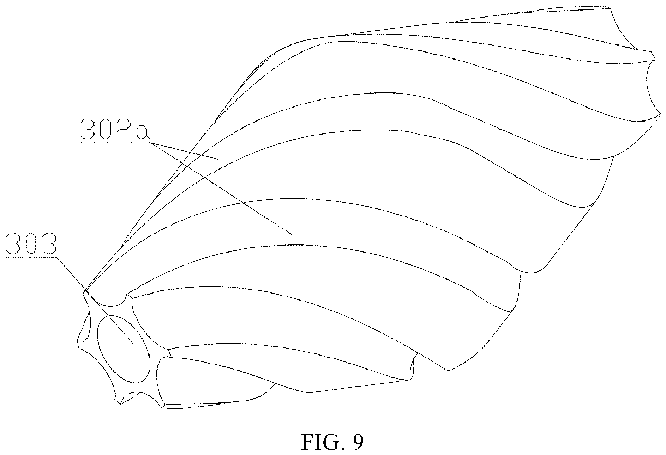

As a preferred implementation of this disclosure, the outer wall of the shearing member 3 has a guide groove, and the outer flow channel 302 is defined as this guide groove. There are two implementation methods for the guide groove in this disclosure:
1. A guide groove is set along the direction of water flow, and the outer flow channel 302 is defined as this guide groove, which can function to comb the water flow. Specifically, there are two ways to form the guide groove: one is by recessing the outer wall of the shearing member 3 to form a groove structure; the other is by designing a strip-like protrusion to enclose a groove structure. Both are merely introducing ways to form the guide groove, and the actual molding manufacturing is chosen as needed.
2. Please refer to Figures 4, 8, and 9. A guide groove is spirally provided on the outer wall of the shearing member 3, adding a further implementation. The shearing member 3 is made into a spindle shape, with the outer wall thereof spirally grooved to form a swirl groove 302a (the outer flow channel 302 is defined as this swirl groove 302a). When the fluid passes through, it will drive the swirl center body (in this case, the shearing member 3) to move and rotate, enhancing the shearing effect. Furthermore, please refer to Figure 9. The swirl center body 3a (in this case, the shearing member) is implemented as a spindle shape, with its middle outer diameter being larger than the outer diameters at both ends (at least greater than the end that first contacts the fluid). Based on the principle of the Venturi tube, changes in pipe diameter cause changes in the pressure inside the pipe. The reduced fluid pressure in the middle section of the swirl center body 3a is also conducive to cavitation. Furthermore, please refer to Figure 7. To facilitate the shearing effect of the shearing member 3, the shearing member 3 is fusiform, with its circumferential diameter gradually decreasing from the middle to both ends, and the depth of the guide groove gradually increasing from the middle to both ends. The variation in the space between the outer wall of the shearing member 3 and the inner wall of the cavitation chamber further enhances the shearing cavitation effect.

As a preferred implementation of this disclosure, there is provided with one through-hole in the interior of the shearing member 3. Preferably, this through-hole is a variable diameter through-hole, the diameter of which gradually decreasing from the water inlet end to the water outlet end of the variable diameter through-hole. Therefore, the hole diameter is larger at the upstream positions of the variable diameter through-hole and smaller at the downstream positions thereof, making it more convenient for the water flow to drive and move the shearing member 3.

Furthermore, to further enhance the water flow shearing cavitation effect of the outer flow channel 302 and the inner flow channel 303, there is also provided, on the outer flow channel 302, an interconnecting hole 301 in communication with the inner flow channel 303. The interconnecting hole 301 allows for early mixing and shearing between inner and outer liquid layers, increasing the bubble content and causing the bubbles to split into smaller and denser bubbles during the second-time shearing in the downstream of the cavitation chamber. Preferably, there may be provided one or more interconnecting holes 301; when the outer flow channel 302 is a guide groove, the number of interconnecting holes 301 is consistent with the number of guide grooves, and the interconnecting holes are correspondingly provided within the guide grooves.

In the shear-type cavitation nozzle according to this disclosure, the shearing member 3 diverts the water flow within the cavitation chamber into at least two streams, inner and outer, through the inner flow channel 303 and the outer flow channel 302. This creates a velocity difference between the inner and outer water flows of the shearing member 3. In fluid dynamics, the "shearing" of a fluid can be understood as the "friction" of a solid. Fluids can be viewed as being superimposed in layers. Under uniform velocity conditions, the interaction between layers is weak, which means the shearing effect is weak. When there is a flow velocity difference between the layers, the shearing effect between layers is enhanced. Therefore, the water flow with a velocity difference causes colliding and shearing at positions downstream of the shearing member, proximate to the water outlet port of the cavitation chamber, forming cavitation through the interaction between liquids. The air in the water flow undergoes water flow cavitation in the form of colliding and shearing, thereby creating bubbles.

When there is a pulsed water flow at the water inlet port, within one spraying pulse cycle, the shearing member 3 is pushed outward when the water inlet supplies water. After one pulse cycle ends, some of the water inside the main body flows back, driving the shearing member 3 to restore. During spraying in the next pulse, when the water inlet supplies water, the shearing member 3 is pushed outward again. This reciprocation causes the end face of the shearing member 3 to perform solid-liquid colliding and squeezing on the water flow, allowing for reciprocative shearing on the water flow.

For fluids with very low viscosity (such as water, air, etc.) at high Reynolds numbers, when in contact with and moving relative to an object, the thin fluid layer proximate to the object's surface slows down due to the viscous shear stress. The fluid in direct contact with the object's surface adheres to it, with a relative velocity of zero. Upwards from the object's surface, the flow velocity of each layer gradually increases until it equals the free stream velocity. Prandtl proposed that a flow around a solid can be divided into two areas, i.e., a very thin layer near the object (boundary layer), and an area outside this layer; therefore, a thin layer near the shearing member 3 also experiences shearing actions between the various layers.

The shearing member 3, through the elastic restoring member 4, reciprocates within the cavitation chamber in cooperation with the colliding of the water flow, further assisting the water flow inside the cavitation chamber in solid-liquid colliding (the upper and lower end faces of the shearing member) and shearing (the circumferential wall surface of the shearing member) cavitation. Through second-time shearing, the overall water flow cavitation effect is enhanced, a large number of bubbles are formed, and the cleaning effect of the water flow is strengthened.

The shearing member 3 is opened thereon with interconnecting holes 301 that connect the outer flow channel 302 with the inner flow channel 303, allowing the outer layer of water flow outside the shearing member 3 to be drawn in by the negative pressure created by the high-speed inner layer of water flow inside the shearing member 3, thus initiating shearing and cavitation in advance. After shearing, the water flow enters the downstream area of the cavitation chamber near the water outlet port for a second-time (once again) liquid-liquid shearing cavitation, thereby enhancing the shearing cavitation effect.

The overall structure is simple, is easy to install and has a good cavitation effect. Unlike the commercial cavitation methods that provide an additional air intake passage, it produces bubbles through cavitation by shearing, utilizing the small amount of air already present in the water flow.

According to the second aspect of this disclosure, a shear-type cavitation oral irrigator is provided, which includes an oral irrigator main body and a shear-type cavitation nozzle. The shear-type cavitation nozzle is installed on the water outlet pipeline 1 of the oral irrigator main body. It should be noted that the oral irrigator main body can be of any prior art model or commercially available model, and it only needs to replace its nozzle with a shear-type cavitation nozzle.

The nozzle mainly includes a main body 2 and a shearing member 3. The main body 2 is the primary structure of the nozzle, with a cavitation chamber inside that is in communication with the water inlet port 21 and the water outlet port 22 of the main body 2. The water flow undergoes shear-type cavitation within the cavitation chamber of the main body 2. The two ends of the main body 2 are provided with the water inlet port 21 and the water outlet port 22, with the water inlet port 21 being typically connected to an external water outlet pipeline 1, and the cavitated water flow being ejected through the water outlet port 22.

Specifically, the shearing member 3 is provided inside the cavitation chamber and has an inner flow channel 303 and an outer flow channel 302. The water inlet ends of the inner flow channel 303 and the outer flow channel 302 correspond to the water inlet port 21, and the water outlet ends of the inner flow channel 303 and the outer flow channel 302 correspond to the water outlet port 22. The shearing member 3 reciprocates within the cavitation chamber driven by the pulsed water flow from the water inlet port 21. When there is a pulsed water flow at the water inlet port, within one pulse spray cycle, the shearing member 3 is pushed outward as the water inlet port 21 supplies water. After one pulse cycle ends, some of the water inside the main body 2 flows back, driving the shearing member 3 to restore. During spraying in the next pulse, when the water inlet port supplies water, the shearing member 3 is pushed outward again. This reciprocation causes the end face of the shearing member 3 to collide with and squeeze the water flow, allowing for reciprocating shearing of the water flow.

The shear-type cavitation oral irrigator according to this disclosure also includes an elastic restoring member 4, which is provided between the shearing member 3 and the main body 2. The shearing member 3, under the influence of the water pressure from the water inlet port 21, reciprocates in cooperation with the elastic restoring member 4 to shear and cavitate the water flow.

The elastic restoring member 4 is interpreted as a structural component that can be restored through elastic potential energy, specifically including both restoration after elongation and restoration after compression. The term "restore" here is not defined as returning to the perfect state of the elastic restoring member 4 when it is not under force, but rather as having the ability to be restored after being elongated or compressed.

In this disclosure, the elastic restoring member 4 is implemented as a spring, however, if there are other structural components that can equivalently replace it, they should also be included within the proper protection scope of the elastic restoring member 4.

When the elastic restoring member 4 in this disclosure is a spring, the installation may be in the following two ways:
1. Referring to Figures 2 and 3 in conjunction with Figure 6, the spring is provided between the shearing member 3 and the water outlet port 22 of the main body 2. When the water flow from the water inlet port 21 pushes the shearing member 3, the spring is located between the shearing member 3 and the water outlet port 22 and gradually compressed, with the elastic potential energy stored in the spring gradually increasing. When the maximum elastic potential energy of the spring in the compressed state exceeds the maximum kinetic energy of the water flow acting on the shearing member 3, the elastic potential energy is released to push the shearing member 3 back, and the elastic potential energy gradually decreases. When it becomes less than the pushing force of the water flow on the shearing member 3, the spring is compressed again, creating a reciprocative shearing effect of the shearing member 3 within the cavitation chamber.
2. Please refer to Figure 5, the spring is located between the shearing member 3 and the main body 2 at the water inlet port 21. The difference is that one end of the spring is fixed to the shearing member 3, and the other end is fixed to one side of the main body 2 proximate to the water inlet port 21. When the water flow from the water inlet port 21 pushes the shearing member 3, the spring, connected between the shearing member 3 and the water inlet port 21, gradually stretches, with the elastic potential energy stored in the spring gradually increasing. When the maximum elastic potential energy of the spring in the stretched state exceeds the maximum kinetic energy of the water flow acting on the shearing member 3, the elastic potential energy is released, the spring contracts, and pulls the shearing member 3 back, with the elastic potential energy gradually decreasing. When it becomes less than the pushing force of the water flow on the shearing member 3, the spring is stretched again, creating a reciprocative shearing effect of the shearing member 3 within the cavitation chamber.

In this disclosure, the water flow space between the outer wall of the shearing member 3 and the inner wall of the main body 2 forms the outer flow channel 302, and a portion of the water flow from the water inlet port 21 of the main body 2 passes through the outer flow channel 302 before reaching the water outlet port 22; the interior of the shearing member 3 is penetrated by at least one through-hole, forming the inner flow channel 303 of the shearing member 3.

To facilitate better diverting the water flow from the water inlet port 21 into the outer flow channel 302 and the inner flow channel 303, and to facilitate the water flow to collide with and push the shearing member 3: the hole diameter of the shearing member 3 at the end of the main body 2 proximate to the water inlet port 21 can be smaller than the diameter of the water inlet port 21. Therefore, when a large amount of water enters the water inlet port 21, some water enters the through-hole, and some water collides with and pushes away the shearing member 3, allowing some of the water flow to also enter the outer flow channel 302 through the space between the shearing member 3 and the water inlet port 21.

When the water flow enters the cavitation chamber through the water inlet port 21 and is diverted into the inner flow channel 303 and the outer flow channel 302, the inner flow channel 303 is a through-hole, and the water flow enters directly without being influenced by the flow velocity. However, when entering the outer flow channel 302, the water flow is influenced by the structure of the shearing member 3 itself, causing the flow velocity to slow down. Therefore, at the water outlet port 22, the two streams of water flow converge at different flow velocities, achieving a liquid-liquid shearing effect, and the reciprocating motion of the shearing member 3 also achieves a solid-liquid shearing effect.

It should be noted that this disclosure does not impose any structural restrictions on the space between the outer wall of the shearing member 3 and the inner wall of the main body 2, nor does it impose any quantity restriction on the through-holes inside the shearing member 3.

As a preferred implementation of this disclosure, the outer wall of the shearing member 3 has a guide groove, and the outer flow channel 302 is defined as this guide groove. There are two implementation methods for the guide groove in this disclosure:
1. A guide groove is set along the direction of water flow, and the outer flow channel 302 is defined as this guide groove, which can function to comb the water flow. Specifically, there are two ways to form the guide groove: one is by recessing the outer wall of the shearing member 3 to form a groove structure; the other is by designing a strip-like protrusion to enclose a groove structure. Both are merely introducing ways to form the guide groove, and the actual molding manufacturing is chosen as needed.
2. Please refer to Figures 4, 8, and 9. A guide groove is spirally provided on the outer wall of the shearing member 3, adding a further implementation. The shearing member 3 is made into a spindle shape, with the outer wall thereof spirally grooved to form a swirl groove 302a (the outer flow channel 302 is defined as this swirl groove 302a). When the fluid passes through, it will drive the swirl center body (in this case, the shearing member 3) to move and rotate, enhancing the shearing effect. Furthermore, please refer to Figure 9. The swirl center body 3a (in this case, the shearing member) is implemented as a spindle shape, with its middle outer diameter being larger than the outer diameters at both ends (at least greater than the end that first contacts the fluid). Based on the principle of the Venturi tube, changes in pipe diameter cause changes in the pressure inside the pipe. The reduced fluid pressure in the middle section of the swirl center body 3a is also conducive to cavitation. Furthermore, please refer to Figure 7. To facilitate the shearing effect of the shearing member 3, the shearing member 3 is fusiform, with its circumferential diameter gradually decreasing from the middle to both ends, and the depth of the guide groove gradually increasing from the middle to both ends. The variation in the space between the outer wall of the shearing member 3 and the inner wall of the cavitation chamber further enhances the shearing cavitation effect.

As a preferred implementation of this disclosure, there is provided with one through-hole in the interior of the shearing member 3. Preferably, this through-hole is a variable diameter through-hole, the diameter of which gradually decreasing from the water inlet end to the water outlet end of the variable diameter through-hole. Therefore, the hole diameter is larger at the upstream positions of the variable diameter through-hole and smaller at the downstream positions thereof, making it more convenient for the water flow to drive and move the shearing member 3.

Furthermore, to further enhance the water flow shearing cavitation effect of the outer flow channel 302 and the inner flow channel 303, there is also provided, on the outer flow channel 302, an interconnecting hole 301 in communication with the inner flow channel 303. The interconnecting hole 301 allows for early mixing and shearing between inner and outer liquid layers, increasing the bubble content and causing the bubbles to split into smaller and denser bubbles during the second-time shearing in the downstream of the cavitation chamber. Preferably, there may be provided one or more interconnecting holes 301; when the outer flow channel 302 is a guide groove, the number of interconnecting holes 301 is consistent with the number of guide grooves, and the interconnecting holes are correspondingly provided within the guide grooves.

In the shear-type cavitation oral irrigator according to this disclosure, the shearing member 3 diverts the water flow within the cavitation chamber into at least two streams, inner and outer, through the inner flow channel 303 and the outer flow channel 302. This creates a velocity difference between the inner and outer water flows of the shearing member 3. In fluid dynamics, the "shearing" of a fluid can be understood as the "friction" of a solid. Fluids can be viewed as being superimposed in layers. Under uniform velocity conditions, the interaction between layers is weak, which means the shearing effect is weak. When there is a flow velocity difference between the layers, the shearing effect between layers is enhanced. Therefore, the water flow with a velocity difference causes colliding and shearing at positions downstream of the shearing member, proximate to the water outlet port of the cavitation chamber, forming cavitation through the interaction between liquids. The air in the water flow undergoes water flow cavitation in the form of colliding and shearing, thereby creating bubbles.

When there is a pulsed water flow at the water inlet port, within one spraying pulse cycle, the shearing member 3 is pushed outward when the water inlet supplies water. After one pulse cycle ends, some of the water inside the main body flows back, driving the shearing member 3 to restore. During spraying in the next pulse, when the water inlet supplies water, the shearing member 3 is pushed outward again. This reciprocation causes the end face of the shearing member 3 to perform solid-liquid colliding and squeezing on the water flow, allowing for reciprocative shearing on the water flow.

For fluids with very low viscosity (such as water, air, etc.) at high Reynolds numbers, when in contact with and moving relative to an object, the thin fluid layer proximate to the object's surface slows down due to the viscous shear stress. The fluid in direct contact with the object's surface adheres to it, with a relative velocity of zero. Upwards from the object's surface, the flow velocity of each layer gradually increases until it equals the free stream velocity. Prandtl proposed that a flow around a solid can be divided into two areas, i.e., a very thin layer near the object (boundary layer), and an area outside this layer; therefore, a thin layer near the shearing member 3 also experiences shearing actions between the various layers.

The shearing member 3, through the elastic restoring member 4, reciprocates within the cavitation chamber in cooperation with the colliding of the water flow, further assisting the water flow inside the cavitation chamber in solid-liquid colliding (the upper and lower end faces of the shearing member) and shearing (the circumferential wall surface of the shearing member) cavitation. Through second-time shearing, the overall water flow cavitation effect is enhanced, a large number of bubbles are formed, and the cleaning effect of the water flow is strengthened.

The shearing member 3 is opened thereon with interconnecting holes 301 that connect the outer flow channel 302 with the inner flow channel 303, allowing the outer layer of water flow outside the shearing member 3 to be drawn in by the negative pressure created by the high-speed inner layer of water flow inside the shearing member 3, thus initiating shearing and cavitation in advance. After shearing, the water flow enters the downstream area of the cavitation chamber near the water outlet port for a second-time (once again) liquid-liquid shearing cavitation, thereby enhancing the shearing cavitation effect.

The overall structure is simple, is easy to install and has a good cavitation effect. Unlike the commercial cavitation methods that provide an additional air intake passage, it produces bubbles through cavitation by shearing, utilizing the small amount of air already present in the water flow.

According to a third aspect of this disclosure, an application of a shear-type cavitation nozzle on a cleaning device is provided: it mainly describes, in conjunction with Figures 1 to 9, the application of the shear-type cavitation nozzle on a cleaning device, where the shear-type cavitation nozzle is installed on a spray pipeline of the cleaning device, the cleaning device including but not limited to a car washing device and an atomization device.

The shear-type cavitation nozzle mainly includes a main body 2 and a shearing member 3. The main body 2 is the primary structure of the nozzle, with a cavitation chamber inside that is in communication with the water inlet port 21 and the water outlet port 22 of the main body 2. The water flow undergoes shear-type cavitation within the cavitation chamber of the main body 2. The two ends of the main body 2 are provided with the water inlet port 21 and the water outlet port 22, with the water inlet port 21 being connected to the spray pipeline of the cleaning device, and the cavitating liquid being ejected through the water outlet port 22.

Specifically, the shearing member 3 is provided inside the cavitation chamber and has an inner flow channel 303 and an outer flow channel 302. The water inlet ends of the inner flow channel 303 and the outer flow channel 302 correspond to the water inlet port 21, and the water outlet ends of the inner flow channel 303 and the outer flow channel 302 correspond to the water outlet port 22. The shearing member 3 reciprocates within the cavitation chamber driven by the pulsed water flow from the water inlet port 21. When there is a pulsed water flow at the water inlet port, within one pulse spray cycle, the shearing member 3 is pushed outward as the water inlet port 21 supplies water. After one pulse cycle ends, some of the water inside the main body 2 flows back, driving the shearing member 3 to restore. During spraying in the next pulse, when the water inlet port supplies water, the shearing member 3 is pushed outward again. This reciprocation causes the end face of the shearing member 3 to collide with and squeeze the water flow, allowing for reciprocating shearing of the water flow.

Furthermore, an elastic restoring member 4 is included, which is provided between the shearing member 3 and the main body 2. The shearing member 3, under the influence of the liquid pressure from the water inlet port 21, reciprocates in cooperation with the elastic restoring member 4 to shear the water flow.

The elastic restoring member 4 is interpreted as a structural component that can be restored through elastic potential energy, specifically including both restoration after elongation and restoration after compression. The term "restore" here is not defined as returning to the perfect state of the elastic restoring member 4 when it is not under force, but rather as having the ability to be restored after being elongated or compressed.

In this disclosure, the elastic restoring member 4 is implemented as a spring, however, if there are other structural components that can equivalently replace it, they should also be included within the proper protection scope of the elastic restoring member 4.

Hereinafter, the "liquid" is interpreted as water flow, and it can also be a liquid mixture such as water plus additives, such as water plus cleaning solution.

When the elastic restoring member 4 in this disclosure is a spring, the installation may be in the following two ways:
1. Referring to Figures 2 and 3 in conjunction with Figure 6, the spring is provided between the shearing member 3 and the water outlet port 22 of the main body 2. When the water flow from the water inlet port 21 pushes the shearing member 3, the spring is located between the shearing member 3 and the water outlet port 22 and gradually compressed, with the elastic potential energy stored in the spring gradually increasing. When the maximum elastic potential energy of the spring in the compressed state exceeds the maximum kinetic energy of the water flow acting on the shearing member 3, the elastic potential energy is released to push the shearing member 3 back, and the elastic potential energy gradually decreases. When it becomes less than the pushing force of the water flow on the shearing member 3, the spring is compressed again, creating a reciprocative shearing effect of the shearing member 3 within the cavitation chamber.
2. Please refer to Figure 5, the spring is located between the shearing member 3 and the main body 2 at the water inlet port 21. The difference is that one end of the spring is fixed to the shearing member 3, and the other end is fixed to one side of the main body 2 proximate to the water inlet port 21. When the water flow from the water inlet port 21 pushes the shearing member 3, the spring, connected between the shearing member 3 and the water inlet port 21, gradually stretches, with the elastic potential energy stored in the spring gradually increasing. When the maximum elastic potential energy of the spring in the stretched state exceeds the maximum kinetic energy of the water flow acting on the shearing member 3, the elastic potential energy is released, the spring contracts, and pulls the shearing member 3 back, with the elastic potential energy gradually decreasing. When it becomes less than the pushing force of the water flow on the shearing member 3, the spring is stretched again, creating a reciprocative shearing effect of the shearing member 3 within the cavitation chamber.

In this disclosure, the water flow space between the outer wall of the shearing member 3 and the inner wall of the main body 2 forms the outer flow channel 302, and a portion of the water flow from the water inlet port 21 of the main body 2 passes through the outer flow channel 302 before reaching the water outlet port 22; the interior of the shearing member 3 is penetrated by at least one through-hole, forming the inner flow channel 303 of the shearing member 3.

To facilitate better diverting the water flow from the water inlet port 21 into the outer flow channel 302 and the inner flow channel 303, and to facilitate the water flow to collide with and push the shearing member 3: the hole diameter of the shearing member 3 at the end of the main body 2 proximate to the water inlet port 21 can be smaller than the diameter of the water inlet port 21. Therefore, when a large amount of water enters the water inlet port 21, some water enters the through-hole, and some water collides with and pushes away the shearing member 3, allowing some of the water flow to also enter the outer flow channel 302 through the space between the shearing member 3 and the water inlet port 21.

When the water flow enters the cavitation chamber through the water inlet port 21 and is diverted into the inner flow channel 303 (through-hole) and the outer flow channel 302 (guide groove), the inner flow channel 303 is a through-hole, and the water flow enters directly without being influenced by the flow velocity. However, when entering the outer flow channel 302, the water flow is influenced by the structure of the shearing member 3 itself, causing the flow velocity to slow down. Therefore, at the water outlet port 22, the two streams of water flow converge at different flow velocities, achieving a liquid-liquid shearing effect, and the reciprocating motion of the shearing member 3 also achieves a solid-liquid shearing effect.

It should be noted that this disclosure does not impose any structural restrictions on the space between the outer wall of the shearing member 3 and the inner wall of the main body 2, nor does it impose any quantity restriction on the through-holes inside the shearing member 3.

As a preferred implementation of this disclosure, the outer wall of the shearing member 3 has a guide groove, and the outer flow channel 302 is defined as this guide groove. There are two implementation methods for the guide groove in this disclosure:
1. A guide groove is set along the direction of water flow, and the outer flow channel 302 is defined as this guide groove, which can function to comb the water flow. Specifically, there are two ways to form the guide groove: one is by recessing the outer wall of the shearing member 3 to form a groove structure; the other is by designing a strip-like protrusion to enclose a groove structure. Both are merely introducing ways to form the guide groove, and the actual molding manufacturing is chosen as needed.
2. A guide groove is spirally provided on the outer wall of the shearing member 3, adding a further implementation. The shearing member 3 is made into a spindle shape, with the outer wall thereof spirally grooved to form a swirl groove 302a (the outer flow channel 302 is defined as this swirl groove 302a). When the fluid passes through, it will drive the swirl center body 3a (in this case, the shearing member 3) to move and rotate, enhancing the shearing effect. Furthermore, the swirl center body 3a (in this case, the shearing member 3) is implemented as a spindle shape, with its middle outer diameter being larger than the outer diameters at both ends (at least greater than the end that first contacts the fluid). Based on the principle of the Venturi tube, changes in pipe diameter cause changes in the pressure inside the pipe. The reduced fluid pressure in the middle section of the swirl center body 3a is also conducive to cavitation.

Furthermore, to facilitate the shearing effect of the shearing member 3, the shearing member 3 is fusiform, with its circumferential diameter gradually decreasing from the middle to both ends, and the depth of the guide groove gradually increasing from the middle to both ends. The variation in the space between the outer wall of the shearing member 3 and the inner wall of the cavitation chamber further enhances the shearing cavitation effect.

As a preferred implementation of this disclosure, there is provided with one through-hole in the interior of the shearing member 3. Preferably, this through-hole is a variable diameter through-hole, the diameter of which gradually decreasing from the water inlet end to the water outlet end of the variable diameter through-hole. Therefore, the hole diameter is larger at the upstream positions of the variable diameter through-hole and smaller at the downstream positions thereof, making it more convenient for the water flow to drive and move the shearing member 3.

Furthermore, to further enhance the water flow shearing cavitation effect of the outer flow channel 302 and the inner flow channel 303, there is also provided, on the outer flow channel 302, an interconnecting hole 301 in communication with the inner flow channel 303. The interconnecting hole 301 allows for early mixing and shearing between inner and outer liquid layers, increasing the bubble content and causing the bubbles to split into smaller and denser bubbles during the second-time shearing in the downstream of the cavitation chamber. Preferably, there may be provided one or more interconnecting holes 301; when the outer flow channel 302 is a guide groove, the number of interconnecting holes 301 is consistent with the number of guide grooves, and the interconnecting holes are correspondingly provided within the guide grooves.

Taking a car washing device as an example, after having the shear-type cavitation nozzle installed, when water and cleaning foam are being sprayed onto the car body, through the liquid shearing action, it can better generate foam and make the foam richer, which is more conducive to the cleaning of the car. Similarly, an atomization device can make the atomization more uniform by shearing the liquid through the nozzle.

Although the present disclosure has been described in detail in connection with some specific embodiments by way of illustration, those skilled in the art should understand that the above examples are provided for illustration only and should not be taken as any limitation on the scope of the disclosure. Those skilled in the art will appreciate that modifications may be made to the above embodiments without departing from the scope and spirit of the present disclosure. We therefore claim as our disclosure all that comes within the scope of the appended claims.

## Claims

1. A shear-type cavitation nozzle, **characterized by** comprising a main body (2) and a shearing member (3); wherein
the main body (2) has a cavitation chamber inside, and is provided at its two ends with respectively a water inlet port (21) and a water outlet port (22) that are both in communication with the cavitation chamber;
the shearing member (3) is provided inside the cavitation chamber and has an inner flow channel (303) and an outer flow channel (302);
the inner flow channel (303) and the outer flow channel (302) each has a water inlet end corresponding to the water inlet port (21), and the inner flow channel (303) and the outer flow channel (302) each has a water outlet end corresponding to the water outlet port (22); and
the shearing member (3) reciprocates inside the cavitation chamber under action of pulsed water flow from the water inlet port (21).

2. The shear-type cavitation nozzle of claim 1, **characterized by** further comprising an elastic restoring member (4) provided between the shearing member (3) and the main body (2), and the shearing member (3) reciprocates in cooperation with the elastic restoring member (4) after being acted upon by water pressure from the water inlet port (21), so as to perform shear-type cavitation on water flow.

3. The shear-type cavitation nozzle of claim 1 or 2, **characterized in that**: the inner flow channel (303) is defined as a through-hole provided on the shearing member (3).

4. The shear-type cavitation nozzle of any one of claims 1 to 3, **characterized in that**: the outer flow channel (302) is defined as a water flow space between the shearing member (3) and the main body (2).

5. The shear-type cavitation nozzle of any one of claims 1 to 4, **characterized in that**: the shearing member (3) is provided with a guide groove on an outer wall thereof, the outer flow channel (302) being defined as the guide groove.

6. The shear-type cavitation nozzle of any one of claims 1 to 5, **characterized in that**: the guide groove is provided along a water flow direction, or spirally provided on an outer wall of the shearing member (3).

7. The shear-type cavitation nozzle of any one of claims 1 to 6, **characterized in that**: when the guide groove is provided along a water flow direction, the guide groove gradually increases in depth from the middle to both ends.

8. The shear-type cavitation nozzle of any one of claims 1 to 7, **characterized in that** the shearing member (3) gradually decreases in circumferential diameter from the middle to both ends.

9. The shear-type cavitation nozzle of any one of claims 1 to 8, **characterized in that**: the through-hole is a variable diameter through-hole which gradually decreases in diameter from a water inlet end thereof to a water outlet end thereof.

10. The shear-type cavitation nozzle of any one of claims 1 to 9, **characterized in that**: the outer flow channel (302) is also provided with an interconnecting hole in communication with the inner flow channel (303).

11. The shear-type cavitation nozzle of any one of claims 1 to 10, **characterized in that**:
the elastic restoring member (4) is a spring provided between the shearing member (3) and the water outlet port (22) of the main body (2); and
the maximum elastic potential energy of the spring in the compressed state is greater than the maximum kinetic energy of the water flow on the shearing member (3).

12. The shear-type cavitation nozzle of any one of claims 1 to 11, **characterized in that**:
the elastic restoring member (4) is a spring, one end thereof being fixed to the shearing member (3), the other end thereof being fixed to the main body (2) near the inlet side; and
the maximum elastic potential energy of the spring in the elongated state is greater than the maximum kinetic energy of the water flow on the shearing member (3).

13. A shear-type cavitation oral irrigator, **characterized by** comprising an oral irrigator main body (2) and a shear-type cavitation nozzle of any one of claims 1 to 12; the shear-type cavitation nozzle is installed on a water outlet pipeline (1) of the oral irrigator main body (2).

14. An application of a shear-type cavitation nozzle on a cleaning device, **characterized by** having a shear-type cavitation nozzle of any one of claims 1 to 12 installed on a spray pipeline of the cleaning device, the cleaning device including but is not limited to a car washing device and an atomization device.
